(19) **Europäisches Patentamt**
**European Patent Office**
**Office européen des brevets**

(11) **EP 4 273 099 A1**

(12) **DEMANDE DE BREVET EUROPEEN**

(43) Date de publication:
**08.11.2023 Bulletin 2023/45**

(21) Numéro de dépôt: **23171571.5**

(22) Date de dépôt: **04.05.2023**

(51) Classification Internationale des Brevets (IPC):
**C01B 32/168** (2017.01) **H01M 4/00** (2006.01)

(52) Classification Coopérative des Brevets (CPC):
**C01B 32/168; H01M 4/00;** C01P 2004/03;
C01P 2006/11; C01P 2006/12; C01P 2006/90

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **06.05.2022 FR 2204308**

(71) Demandeur: **ARKEMA FRANCE**
**92700 Colombes (FR)**

(72) Inventeurs:
- **KORZHENKO, Oleksandr**
  **64170 LACQ (FR)**
- **VINCENDEAU, Christophe**
  **64170 LACQ (FR)**
- **DELPRAT, Patrick**
  **64170 LACQ (FR)**
- **BORDERE, Serge**
  **64170 LACQ (FR)**

(54) **COMPOSITIONS SANS OU AVEC PEU DE SOLVANT COMPRENANT DES NANOTUBES DE CARBONE ET AU MOINS UN POLYMERE**

(57) La présente invention concerne des compositions de nanotubes de carbone pouvant être mise en oeuvre sous forme solide, c'est-à-dire en l'absence de solvant. Ces compositions comprennent au moins un polymère et sont facilement dispersables dans des formulations pour la fabrication d'électrodes pour batteries et en particulier les batteries Li-ion dans des procédés liquide ou solide. L'invention concerne également le procédé d'obtention de ces poudres, leur utilisation dans la fabrication d'électrodes pour batterie ainsi que les batteries les comprenant.

EP 4 273 099 A1

**Description**

**DOMAINE DE L'INVENTION**

La présente invention concerne des compositions comprenant des nanotubes de carbone se présentant sous forme de poudre. Ces compositions se présentant sous forme de poudre comprennent au moins un polymère et sont facilement dispersables dans des formulations solvantées ou non solvantées pour la fabrication d'électrodes pour batteries et en particulier les batteries Liion.

**CONTEXTE**

Les nanotubes de carbone sont faits de feuillets de graphite enroulés. Les nanotubes peuvent être composés d'un feuillet simple et sont alors appelés nanotubes mono-feuillet (SWNT, abréviation communément utilisée en langue anglaise pour « single-wall nanotubes »). Les nanotubes peuvent également être composés de plusieurs feuillets concentriques, et sont alors appelés nanotubes multi-feuillets (MWNT, abréviation communément utilisée en langue anglaise pour « multi-wall nanotubes »). Les nanotubes de carbone sont, par conséquent, des candidats idéaux pour une vaste gamme d'applications, en particulier comme additifs pour améliorer la résistance électronique des matériaux et dispositifs tels que des électrodes de batteries, incluant des anodes et des cathodes, notamment dans des batteries à ions lithium. Ces améliorations de la performance des batteries s'inscrivent en ligne avec le développement des véhicules électriques et donc la lutte contre le réchauffement climatique.

Les nanotubes de carbone tels qu'on peut les obtenir dans les procédés de synthèse connus ne peuvent pas être directement formulés avec les composants entrant dans la composition des électrodes pour batteries car ils se présentent sous forme de fagots ou pelotes enchevêtrées. Leur densité est trop faible, typiquement inférieure à 0,1 et les formulations obtenues ne présentent pas les améliorations de conduction électrique que l'on peut attendre du fait de leur présence.

Aujourd'hui, leur utilisation nécessite une dispersion préalable sous forme liquide comprenant un solvant qui peut être l'eau ou un solvant organique. Cette dispersion dans un liquide permet de libérer les nanotubes de carbone de leurs enchevêtrements mais nécessite des quantités importantes de solvant. Compte tenu des faibles quantités de nanotubes de carbone présentent dans ces dispersions, il est par conséquent nécessaire de transporter de grandes quantités de matière entre les sites de production de nanotubes de carbone et de leur dispersion et les sites de fabrication d'électrodes et de batteries utilisant ces dispersions, engendrant un bilan carbone très défavorable.

Il est donc recherché des solutions qui minimisent les quantités de solvant nécessaires à la fabrication de ces dispersions, voir qui élimine le solvant. Transporter les nanotubes de carbone associés à d'autres composés sous forme sèche à haute teneur en nanotubes de carbone est une alternative qui présente le meilleur bilan carbone. Jusqu'à présent, dans EP2550699 il est décrit des compositions comprenant des nanotubes de carbone associés à un solvant et à un polymère qui aide à la dispersion des nanotubes de carbone. Dans ce document, il est décrit la fabrication de granulés nanotubes de carbone /eau/carboxy méthyle cellulose. Ces granulés peuvent ensuite être séchés dans une étuve et être redispersés avant la formulation d'électrodes.

Cependant, ces granulés ne permettent pas lors de la fabrication d'une électrode d'atteindre une performance électrique équivalente à celle d'avec une dispersion dans un solvant obtenu par un broyage à bille par exemple, ce qui constitue la méthode utilisée actuellement industriellement. Par conséquent, il n'existe pas à ce jour de solution permettant la formulation d'électrodes comprenant des nanotubes de carbone dans des conditions optimales. Soit la voie sèche de EP2550699 ne permet pas des performances électriques optimales, soit la voie en présence de solvant impose de transporter d'importantes quantités de nanotubes de carbone formulés en présence de solvant.

La demanderesse a par conséquent cherché une autre forme sèche que des granulés, cette forme sèche pouvant être redispersée chez l'utilisateur dans l'étape de préparation de l'électrode. De cette façon, les volumes de matières transportées sont considérablement réduits.

De façon inattendue la demanderesse a découvert qu'avec certains paramètres de densité et de porosité d'une poudre, il est possible d'obtenir une composition de nanotubes de carbone - polymère pouvant être très bien redispersée et apportant des performances équivalent à la voie liquide. Ces compositions de nanotubes de carbone - polymère sous forme de poudre peuvent alors être correctement reformulées dans une électrode performante pour les batteries. En particulier ces poudres peuvent être combinées aux autres composants des électrodes soit en repassant par voie solvant pour fabriquer l'électrode, en déposant le mélange sous forme liquide puis en séchant l'électrode, soit en déposant ces poudres conjointement aux composants de l'électrode mélangés sous forme solide puis déposés par une méthode adaptée tel qu'une pulvérisation électrostatique puis calandrage.

**EP 4 273 099 A1**

**RESUME DE L'INVENTION:**

L'invention concerne une composition comprenant des nanotubes de carbone et au moins un polymère, dans un rapport massique nanotube de carbone/polymère inférieur à 100/5, ladite composition se présentant sous forme d'une poudre de masse volumique apparente non tassée comprise entre 0,11 et 0,5 g / cm$^3$, présentant une surface spécifique apparente comprise entre 50 et 350 m$^2$/g et une teneur en solvant inférieure à 10 % massique.

**DESCRIPTION DETAILLEE :**

Les compositions de l'invention présentent un rapport massique nanotube de carbone/polymère inférieur à 100/5, de préférence inférieur à 10/1, de préférence inférieur à 4/1 mais supérieur à 1/1.

Les compositions de l'invention se présentent sous forme de poudre de grains sphéroïdaux dont le diamètre varie de quelques microns à une centaine de microns.

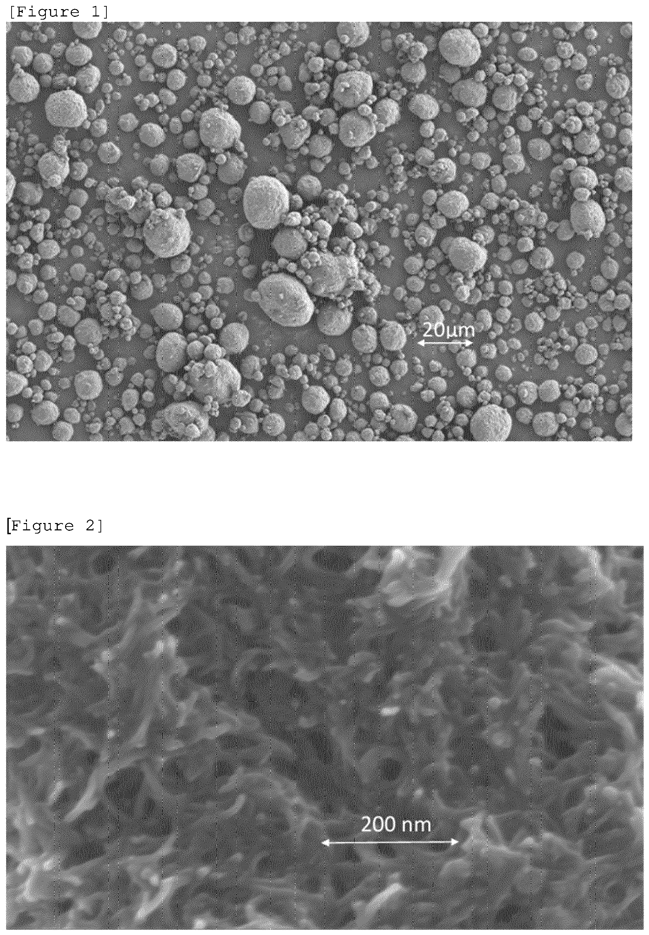

La figure 1 montre une photo en microscopie à balayage d'une poudre typique de l'invention.
La figure 2 montre la morphologie à la surface d'un grain d'une poudre typique de l'invention.

Ces poudres comprenant des nanotubes de carbone peuvent être obtenues sous certaines conditions de séchage d'une dispersion dont l'atomisation (séchage par pulvérisation) est une possibilité exemplifiée par la demanderesse.

Ces dispersions sont fabriquées à partir de nanotubes de carbone en général de densité inférieure à 0,1 traités sous fort cisaillement en présence d'un solvant et d'au moins un polymère. Lors de la préparation de ces dispersions, d'autres composés peuvent être combinés à ces dispersions.

Parmi les autres composés qui peuvent être rajoutés dans les compositions de l'invention, on peut citer les fibres de carbone, les nanofibres de carbone, le graphène, ou encore le noir de carbone. De façon préféré, il s'agit de noir de carbone. Lorsqu'il s'agit de noir de carbone, les ratios massiques nanotubes de carbone/noir de carbone peuvent varier de 100/1 à 1/100, de préférence de 100/5 à 1/5.

Les nanotubes de carbone présents dans les compositions de l'invention peuvent être des nanotubes de carbone mono feuillets ou multi feuillets. De préférence ils sont multi feuillets. Ils se présentent sous forme enchevêtrée (dit « entangled ») ou sous forme fagots (dit « bundle »). De préférence il se présentent sous forme enchevêtrée. Ils peuvent être purifiés, c'est-à-dire débarrassés des impuretés résiduelles présentent à l'issue de leur synthèse, en particulier les métaux.

Les polymères utilisés dans le cadre de l'invention peuvent être des homopolymères, des copolymères statistiques, des copolymères à blocs ou encore des copolymères à gradient, ces différents polymères pouvant être combinés ou utilisés seuls. De préférence les polymères présentent une masse moléculaire en poids inférieure à 150000 g/mole, de préférence inférieure à 120000 g/mole et de façon encore préférée inférieure à 80000 g/mole mesurée par chromatographie d'exclusion stérique étalonnée avec des étalons polystyrène.

Le choix du polymère ou de la combinaison de plusieurs polymères est adapté au solvant utilisé pour préparer les dispersions préalables comprenant les nanotubes de carbone. Les polymères doivent être solubles dans le solvant, c'est-à-dire présenter une solution homogène.

On entend par soluble la possibilité de dissolution d'au moins 5 g de polymère par litre de solvant et de préférence d'au moins 20 g par litre de solvant à une température comprise entre 5 et 80 °C, de préférence entre 15 et 35°C, et de façon encore préférée entre 15 et 25°C.

Ainsi tout type de polymère et tout type de solvant peuvent convenir dans le cadre de l'invention, à condition que le couple polymère-solvant remplisse la condition de solubilité.

Les solvants sont choisis de façon non limitative parmi l'eau, la N-méthyl pyrrolidone, le triéthyl phosphate, le cyrène™, le diméthyl sulfoxide, le diméthylformamide, les cétones, les acétates, les furanes, les alkylcarbonates, les alcools ainsi que leur mélange. Le solvant peut être le $CO_2$ en état supercritique. De préférence le solvant est l'eau.

Le polymère peut être un copolymère comprenant des entités monomériques (meth) acryliques ou styréniques dont au moins une entité présente une fonctionnalité choisie parmi les hydroxy, acide, acide sulfonique, epoxy, amide, éther, ester, et pyrolidone. Parmi ces monomères fonctionnels ou non, on peut citer les monomères tels que l'acide méthacrylique, l'acide acrylique, la diméthyl acrylamide, le méthacrylate de glycidyle, l'acrylate d'hydroxyéthyle, le méthacrylate de méthyle, l'acrylate de méthyle et de façon plus générale les (méth) acrylates d'alkyle substitués ou non, cycliques ou non, mais également les styrènes substitués ou non, l'acide 2-acrylamido-2- méthylpropane sulfonique, la N-vinyl pyrrolidone. Le polymère peut également être choisi parmi les polysaccharides, les polysaccharides modifiés, les polyacrylamides homopolymères ou copolymères, les poly acides acryliques homopolymères ou copolymères comprenant majoritairement de l'acide acrylique, les alcools polyvinyliques homopolymères ou copolymères, les polyvinyle pyrrolidone homopolymères ou copolymères, ainsi que le mélange de ces polymères.

3

De préférence les polymères utilisés sont choisis parmi les carboxy méthyl cellulose, les polyvinyl pyrrolidone homopolymères ou copolymères, les alcools polyvinyliques homopolymères ou copolymères, les poly acides acryliques homopolymères ou copolymères comprenant majoritairement de l'acide acrylique, et plus particulièrement les carboxy méthyl cellulose (CMC), les polyvinyl pyrrolidone homopolymères ou copolymères et de façon encore préférée les polyvinyl pyrrolidone homopolymères ou copolymères. S'agissant des polyvinyl pyrrolidone homopolymères ou copolymères, la masse moléculaire moyenne en poids est comprise entre 10000 et 120000 g/mole, de préférence entre 20000 et 60000 g/mole et de façon encore préférée entre 20000 et 40000 g/mole. Les polymère ayants les groupes fonctionnels acide (CMC, les poly acides acryliques, etc) peuvent être utilisés sous forme de leur sels alcalins, de préférence $Li^+$ ou $Na^+$).

En outre, des polymères halogénés tels que le PVDF ou des élastomères non halogénés de façon combinée ou non peuvent être présents conjointement en plus des polymères déjà présents. Il s'agit de polymères entrant dans la composition des électrodes et qui peuvent être ajoutés à ce stade, c'est-à-dire avant la formulation finale de l'électrode.

L'invention concerne également ces compositions en présence de polymères halogénés tels que le PVDF ou des élastomères non halogénés, seuls ou en combinaison.

Le terme « PVDF » employé ici comprend des homopolymères de fluorure de vinylidène (VDF) ou des copolymères de VDF et d'au moins un autre comonomère dans lesquels le VDF représente au moins 50% en moles. Les comonomères polymérisables avec le VDF sont choisis parmi le fluorure de vinyle, le trifluoroéthylène, le chlorotrifluoroéthylène (CTFE), le 1,2-difluoroéthylène, tétrafluoroéthylène (TFE), l'hexafluoropropylène (HFP), les perfluoro(alky vinyl) éthers tels que le perfluoro(méthylvinyl)éther (PMVE), le perfluoro(éthylvinyl)éther (PEVE), le perfluoro(propylvinyl)éther (PPVE), le perfluoro(1,3-dioxozole); le perfluoro(2,2diméthyl-1,3dioxozole) (PDD), le produit de formule CF2=CF0CF2CF(CF3)OCF2CF2X dans laquelle X est SO2F, CO2H, CH2OH; CH2OCN ou CH2OPO3H, le produit de formule CF2=CFOCF2CF2SO2F; le produit de formule F(CF2)nCH2OCF=CF2 dans laquelle n est 1,2,3,4 ou 5, le produit de formule R1CH2OCF=CF2 dans laquelle R1 est l'hydrogène ou F(CF2)z et z vaut 1, 2, 3, ou 4; le produit de formule R3OCF=CH2 dans laquelle R3 est F(CF2)z et z vaut 1, 2, 3, ou 4 ou encore le perfluorobutyléthylène (PFBE), le fluoroéthylènepropylène (FEP), le 3,3,3-trifluoropropène, le 2 trifluoromethyl-3,3,3-trifluoro-1-propène, le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropene ou HFO-1234yc, le1,2,3,3-tetrafluoropropène ou HFO-1234ye, le 1,1,3,3-tetrafluoropropène ou HFO-1234zc et le chlorotetrafluoropropène ou HCFO-1224. Le PVDF peut être introduit dans les compositions de l'invention sous forme solubilisée ou sous forme d'un latex dans le cas particulier où le procédé de préparation des compositions de l'invention sous forme de poudre est l'atomisation.

Les élastomères non halogénés peuvent être du type des caoutchoucs naturels ou non, les caoutchouc nitriles , les NBR (nitrile butadiène rubber), SBR (styrène butadiène rubber), les polyphosphazènes substitués, les polymères acryliques, les polymères siliconés, éventuellement en combinaison de ces élastomères.

Selon une variante de l'invention, les compositions de l'invention peuvent aussi être additionnées d'additifs et en particulier les carbonates organiques tel que l'éthyle carbonate, le propyle carbonate, le diéthyle carbonate, le diméthyle carbonate, le fluoro éthylène carbonate seuls ou en mélange, et de préférence l'éthyle carbonate avec une proportion du carbonate organique inférieure à 60% massique par rapport au polymère et éventuellement des absorbeurs d'humidité tels que le bis(trifluorométhane)sulfonimide de lithium, l'hexafluorophosphate de lithium, le tétrafluoroborate de lithium, le bis(fluorosulfonyl)imide, de lithium, le perchlorate de lithium, l'hexafluoroarsenate de lithium, et le 4,5-dicyano-2-(trifluoromethyl) imidazole sous forme acide ou de sel de lithium, seuls ou en mélange et en particulier le 4,5-dicyano-2-trifluorométhyle imidazole sous forme acide ou de sel de lithium, en quantité maximum de 50 % massique par rapport aux nanotubes de carbone.

L'invention concerne également ces compositions en présence de ces additifs.

Les compositions de l'inventions se présentant sous forme de poudre peuvent être préparées par différents procédés parmi lesquels on peut citer le procédé de précipitation des compositions comprenant des nanotubes de carbone/Solvant/Polymère à l'aide d'un non solvant du polymère, le procédé de lyophilisation des compositions comprenant des nanotubes de carbone/Solvant/Polymère, le procédé comprenant les étapes d'extrusion des compositions comprenant des nanotubes de carbone/Polymère avec injection de $CO_2$ supercritique lors de l'étape d'extrusion avec une proportion massique de CO2 supercritique compris entre 25 % et 1000 % de la composition puis suivi du dégazage du $CO_2$, ou autre dispositif mettant en oeuvre le $CO_2$ supercritique, ou le procédé d'atomisation des compositions comprenant des nanotubes de carbone/Solvant/Polymère.

Lors de la préparation des compositions de l'invention sous forme de poudre avec l'un ou l'autre des procédés, les additifs peuvent être additionnés conjointement aux compositions comprenant des nanotubes de carbone et au moins un polymère. On obtient alors des poudres qui peuvent comprendre des nanotubes de carbone, au moins un polymère et un ou plusieurs additifs.

Selon un mode préféré, les compositions se présentant sous forme de poudre sont préparées par le procédé comprenant les étapes d'extrusion d'une de ces compositions comprenant des nanotubes de carbone et au moins un polymère avec injection de $CO_2$ supercritique lors de l'étape d'extrusion avec une proportion massique de $CO_2$ super-

critique compris entre 25 % et 1000 % de la composition comprenant des nanotubes de carbone et au moins un polymère puis suivi du dégazage du $CO_2$ et récupération de poudre.

Ainsi la présente invention concerne également un procédé d'obtention des compositions de l'invention par extrusion des compositions comprenant des nanotubes de carbone et au moins un polymère, avec injection de $CO_2$ supercritique lors de l'étape d'extrusion, avec une proportion massique de $CO_2$ supercritique comprise entre 25 % et 1000 % de la composition puis suivi du dégazage du $CO_2$ et récupération de poudre.

Selon un mode encore plus préféré, les compositions se présentant sous forme de poudre sont préparées par le procédé d'atomisation.

Dans le cas de l'atomisation on procède de la façon suivante :

Les compositions de l'invention sont préparées en deux étapes:

Une première étape consiste à disperser les nanotubes de carbone en présence d'au moins un polymère et du solvant dans un outil adapté choisi parmi les défloculeurs, les broyeurs à billes, les outils de dispersion-z équipés d'une agitation rotor/stator, les ultrasons ou encore les cavitateurs. Il s'agit d'outils permettant sous fort cisaillement de dissocier les pelotes de nanotubes de carbone et de correctement les disperser dans le solvant. De préférence, il s'agit de défloculeurs et de broyeurs à billes de façon combinée ou non.

Lors de cette étape on peut aussi combiner le PVDF, et/ou les élastomères non halogénés et/ou les composés additionnels tel que les carbonates organiques ou les absorbeurs d'humidité.

On opère dans des proportions massiques de nanotubes de carbone - polymère comprises entre 3 et 20 % et de préférence entre 5 et 10 % en rapport avec le solvant. La dispersion ainsi obtenue est ensuite diluée dans le solvant de telle sorte que sa viscosité soit amenée dans des valeurs Brookfield comprises entre 50 et 10000 Centipoises et de préférence entre 100 et 1500 Centipoises. Les valeurs de viscosités concernent les dispersions mesurées à la fin de leur préparation. La viscosité de ces dispersions peut légèrement évoluer avec le temps au-delà de 10000 Centipoises.

Dans un soucis de bonne stabilité, il convient d'opérer dans des conditions de pH de la dispersion comprises entre 3 et 12 et de préférence entre 5 et 10.

Dans une deuxième étape, cette dernière dispersion est atomisée par passage dans un flux de gaz pouvant être de l'air, un gaz inerte ou un mélange de gaz inertes, ou encore d'air et de gaz inerte, avec une température de gaz entrant dans l'atomiseur supérieure à 120°C, de préférence comprise entre 120 et 240 °C et de façon encore préférée comprise entre 140 et 240°C, idéalement entre 200 et 240°C et la poudre de nanotubes de carbone /polymère est récupérée. Un séchage post atomisation peut s'avérer nécessaire pour ramener la teneur en solvant inférieure à 0,5 % massique. De façon alternative et en fonction des formulations opérées lors du processus ultérieur de fabrication d'électrodes, du PVDF et /ou les élastomères non halogénés sous forme d'un latex peuvent être rajoutés aux compositions de l'invention lors de la phase d'atomisation. Ainsi la présente invention concerne également un procédé d'obtention des compositions de l'invention par atomisation comprenant les étapes suivantes :

- dispersion des nanotubes de carbone dans un solvant en présence d'au moins un polymère.
- atomisation de la dispersion par un gaz chauffé à une température supérieure à 120°C puis récupération de poudre.

De préférence, le solvant utilisé dans le procédé d'atomisation est l'eau.

Les compositions de l'invention se présentent sous forme de poudres de particules unitaires poreuses ou d'agrégats de particules unitaires poreuses avec de préférence une granulométrie correspondant à des valeurs $D_v$10 comprises entre 4 et 8$\mu$m, $D_v$ 50 comprises entre 15 et 30 $\mu$m et $D_v$ 90 comprises entre 50 et 100 $\mu$m, $D_v$ signifiant le diamètre moyen en volume. La mesure est effectuée à l'aide d'un appareil de diffraction laser de type Malvern (Mastersizer 3000). On ne sortirait pas du cadre de l'invention avec des poudres présentant de plus fortes ou de plus faibles granulométries.

La poudre présente une surface spécifique apparente comprise entre 50 et 350 m$^2$/g et de préférence entre 90 et 200 m$^2$/g. La mesure BET est effectuée à l'aide d'un appareil ASAP 2460 de chez microméritics.

La poudre présente une masse volumique apparente non tassée comprise entre 0,11 et 0,5 g/cm$^3$, de préférence entre 0,12 et 0,5 g/cm$^3$, et de façon préférée entre 0,15 et 0,5 g/cm$^3$.

La poudre présente une teneur en solvant résiduel massique inférieure à 10 % de préférence inférieure à 6 % et de façon préférée inférieure à 5 %.

Les compositions de l'invention se présentant sous forme de poudres sont utiles pour la fabrication d'électrodes de batteries et en particulier pour la fabrication de cathodes. Pour la fabrication des électrodes, on mélange les compositions de l'invention soit sous forme dispersées dans un solvant avec les autres composés de l'électrode, soit telles quelles avec les autres composés de l'électrode, c'est-à-dire sous forme sèche dans un mélangeur adapté.

Lors de la fabrication des formulations d'électrodes avec les compositions de l'invention, le mélange sera effectué de préférence avec une extrudeuse. La demanderesse a en effet constaté que l'extrudeuse est l'outil donnant les meilleurs résultats de conductivité électrique dans les formulations utilisées pour des électrodes.

L'invention concerne donc également des électrodes fabriquées à l'aide de ces poudres et de préférence des cathodes.

Selon une première préférence, on mélange ainsi les poudres de l'invention avec une matière active de type oxyde de lithium NMC (Nickel, Manganèse, Cobalt), LFP (Lithium, Fer, Phosphate), LMO (Lithium, Oxyde de Manganèse) ou LMNO (Lithium oxyde de Manganèse et de Nickel) et un polymère fluoré typiquement du PVDF et/ou des élastomères non halogénés lorsqu'ils ne sont pas déjà présent dans les compositions de l'invention dans un mélangeur adapté, par exemple un mélangeur à disque ou un mélangeur planétaire, puis un solvant est rajouté. Le mélange obtenu est déposé sur une plaque conductrice puis le solvant est évaporé.

Selon une deuxième préférence, et cela constitue un autre avantage de l'invention on peut utiliser les poudres de l'invention dans les procédés de formulation d'électrodes sans solvant (dites « dry process » en anglais) c'est-à-dire la formulation directe des poudres de l'invention avec des poudres de matière active de l'électrode et autres composés selon que l'électrode est une anode ou une cathode. Ainsi on peut directement mélanger tous les ingrédients qui constituent une électrode sous forme de poudre, sans solvant et mettre en forme l'électrode par un calandrage / lamination à chaud, électrospray (dépôt de poudre par voie électrostatique) suivi de lamination à chaud.

D'autres technologies sans solvant peuvent donc avantageusement utiliser les poudres compositions de l'invention sous forme de poudre, dans l'extrusion des matières actives des cathodes ou anodes formulées directement dans l'électrolyte liquide ou solide et ainsi fabriquer cathodes ou anodes directement utilisables dans l'assemblage de batteries.

L'invention concerne également l'utilisation des compositions de l'invention pour l'obtention d'électrodes, cathodes ou anodes, les électrodes, cathodes ou anodes obtenues à l'aide des compositions de l'invention formulées par voie solvant ou sous forme sèche et de préférence des cathodes, ainsi que les batteries obtenues avec ces électrodes.

Exemples.

Les exemples ont été conduits avec des nanotubes de carbone Graphistrength® C100 (Arkema) présentant des taux de métaux résiduels inférieurs à 50ppm.

Exemple 1. Composition liquide de nanotubes de carbone de référence. Comparatif hors invention.

Dans cet exemple on reproduit une composition de nanotubes de carbone typique des pratiques utilisées dans l'industrie à ce jour. La composition comprenant des nanotubes de carbone est donc une composition liquide à faible teneur en nanotubes de carbone et forte teneur en solvant. Cette composition est utilisée dans l'exemple 2 pour la fabrication d'une électrode de référence constituant l'objectif à atteindre avec les compositions de l'invention.

Dans un floculateur sont introduits 100g de nanotubes de carbone, 25g de PVP ((Poly Vinyl Pyrrolidone) ) (masse moléculaire en poids de 24000g/mol) et 1000g de N-méthyl pyrrolidone. Ce mélange est homogénéisé dans un défloculeur puis traité dans un broyeur à billes horizontal, afin de disperser les particules de nanotubes de carbone. Les billes utilisées présentent un diamètre de 0.6 mm de diamètre et la durée de broyage est 200-260 minutes. De la N-méthyl pyrrolidone supplémentaire (166 g) est ajoutée de sorte à obtenir une composition fluide et manipulable.

La viscosité de la dispersion dénommée Dref obtenue est mesurée sur un viscosimètre Brookfield. La composition obtenue Dref présente un taux de nanotubes de carbone de 7,68% et la viscosité est mesurée à 600 Centipoises à 25°C.

Exemple 2 : Fabrication d'une électrode de référence (Cathode).

La dispersion Dref obtenue dans l'Exemple 1 est introduite dans un mélangeur planétaire suivis par l'addition de 95 g d'oxyde de lithium nickel manganèse cobalt contenant un ratio en Ni : Mg : Co 6 : 2 : 2, appelé NMC 622, de N-méthyl pyrrolidone comprenant du PVDF (commercialisé par Arkema sous la référence Kynar HSV 1810) durant 30 minutes de telle sorte à obtenir une pâte avec l'ensemble des composés constitutifs d'une cathode. La formulation obtenue exprimée sous forme sèche est la suivante en pourcentage massique:

- 97,75% de NMC 622 ;
- 1 % de nanotubes de carbone;
- 1% de PVDF
- 0,25% de PVP.

La teneur en matière sèche est de 74%.

La préparation de l'électrode est faite par enduction à l'aide d'un filmographe de type Sheen et d'un applicateur BYK-Gardner réglable. Un film de 200 $\mu$m d'épaisseur est appliqué sur une feuille d'aluminium de 25 $\mu$m d'épaisseur sur une feuille de polyéthylène téréphtalate (PET) constituant un support isolant. Un séchage dans une étuve ventilée est effectué pendant 2 h à 120°C.

L'électrode séchée est ensuite calandrée pour atteindre une épaisseur finale de film d'environ 80 $\mu$m.

Afin de calculer la résistance spécifique, l'électrode supportée par le PET est découpée en format 3x4 cm. De la laque d'argent est peinte aux extrémités de la découpe. Une fois la laque sèche, la résistance spécifique (R) est mesurée à 25°C avec un ohmmètre.

La valeur de la résistance spécifique R est une bonne indication de la performance de l'effet de l'additif carboné (nanotubes de carbone dans le cas présent).

Sur cette électrode on mesure une résistance de 7 ohms. Cette valeur constitue la référence et donc l'objectif à atteindre dans le cadre de l'invention.

Exemple 3 : Composition sous forme sèche de nanotubes de carbone selon l'état de l'art connu. Comparatif 2 hors invention.

Dans cet exemple on opère selon EP 2550699.

4 kg de nanotubes de carbone sont mélangés avec 200 g de PVP (masse moléculaire en poids de 24000 g/mol). Après l'ajout de 14 L de l'eau déminéralisé, le mélange est homogénéisé dans un mélangeur rotatif de 60 L. Le mélange est ensuite introduit dans la trémie d'une extrudeuse Clextral BC21 par un doseur gravimétrique réglé à 15 kg/h et d'une granulation du jonc obtenu adaptée. Le système de régulation de température de l'extrudeuse est réglé à 50°C. La vitesse de rotation des vis est de 400 rpm. On obtient des granulés cylindriques de diamètre 4-5 mm et de longueur entre 3-20 mm.

Les granulés sont ensuite séchés dans une étuve ventilée à 140°C durant 4h. La masse volumique apparente des granulés est de 1,2 g/cm3. Ces granulés sont broyés dans un broyeur jet de gaz pour obtenir une poudre présentant un $D_v90 < 100$ $\mu$m. La masse volumique apparente non tassée de cette poudre après le broyage a été mesuré à 0,85 g/cm$^3$. Cette poudre obtenue est nommée P0 et présente une surface spécifique apparente mesurée par BET de 34 m$^2$/g. La mesure BET est effectuée à l'aide d'un appareil ASAP 2460 de chez microméritics.

La masse volumique apparente non tassée (MVNT) est définie par le rapport de la masse de poudre et de son volume après avoir été détassée.

La mesure est effectuée en mesurant le volume maximum occupé par la poudre dans une éprouvette graduée de masse T fermée de 100 cm$^3$ retournée plusieurs fois lentement. On effectue les pesées à l'aide d'une balance de précision à 0,1 g.

L'éprouvette est remplie aux trois quarts puis pesée en une masse m1, fermée, puis retournée lentement plusieurs fois jusqu'à obtenir le volume maximum occupé par la poudre. Le volume occupé est noté v en cm$^3$.

La masse volumique apparente non tassée exprimée en g/cm$^3$ est calculée par la formule suivante :

$$MVNT = (m1-T) / v$$

Exemple 4. Composition de nanotubes de carbone et PVP selon l'invention.

La composition décrite dans l'exemple 1 est réalisée de manière identique mais en remplaçant la N-méthyl pyrrolidone par de l'eau.

La composition en matière sèche est la suivante :100 g de nanotubes de carbone et 25 g de poly (vinyl pyrrolidone) (PVP) avec un rapport massique nanotubes de carbone /PVP 4 / 1. Ce mélange est homogénéisé dans un défloculeur avec 1000 g d'eau, et ensuite broyé dans un broyeur à billes horizontal comme décrit dans l'exemple 1. Les quantités supplémentaires d'eau ont été rajoutées durant le broyage pour ajuster la viscosité.

A la fin de broyage, l'extrait sec est de 6% massique et la proportion de nanotubes de carbone est de 4,8%. La viscosité finale est de 500 Centipoises.

La dispersion aqueuse est ensuite séchée dans un atomiseur. La dispersion est pulvérisée en présence de flux d'air préchauffé à différentes températures.

Les compositions solides P1 à P4 sont collectées sous forme de poudre en sortie de l'atomiseur dans les conditions données au tableau 1.

[Tableau 1]

| Tableau 1 | T | MVNT | H | S | G |
|---|---|---|---|---|---|
| P1 | 120 | 0,38 | 6 | 34 | |
| P2 | 160 | 0,32 | 3,84 | 92 | 6/19/63 |
| P3 | 200 | 0,31 | 4,95 | 117 | 7/24/88 |

(suite)

| Tableau 1 | T | MVNT | H | S | G |
|---|---|---|---|---|---|
| P4 | 240 | 0,28 | 1,95 | 158 | 6/19/65 |

| |
|---|
| T : Température de l'air préchauffé entrant dans l'atomiseur °C. <br> MVNT : Masse volumique apparente non tassée. <br> H : % massique de l'humidité résiduelle. <br> S : Surface spécifique apparente, BET m$^2$/g. <br> G : Distribution granulométrique $D_v$10/$D_v$ 50/$D_v$90 en $\mu$m. |

Les 4 échantillons de poudre P1 à P4 obtenus à l'issue de l'atomisation sont par la suite traités dans une étuve sous vide pour éliminer l'humidité résiduelle. Les formulations de cet exemple sous forme de poudres sont utilisées directement dans la formulation d'électrode de type Cathode NMC, comme décrit dans l'exemple 2.

Toutes les formulations obtenues dans cet exemple ont une masse volumique apparente beaucoup plus faible par rapport au agrégats broyés solides de l'exemple 3 (P0). P2, P3 et P4 présentent des surfaces spécifiques apparentes supérieures à P0 et à P1.

Exemple 5 : Réalisation des encres pour cathodes et évaluation des cathodes avec les poudres nanotubes de carbone P1 à P4 et l'échantillon P0 de l'exemple 3.

Deux méthodes sont utilisées pour faire la cathode de la formulation décrit dans l'exemple 2.

**Méthode 1** : La formulation est identique à la méthode de l'exemple 2, mais en utilisant les poudres P0 à P4 à la place de la dispersion Dref de l'exemple 1.

NMC 622, PVDF Kynar HSV8010 et les poudre P0 à P4 ont été pré mélangées à sec dans un mélangeur planétaire puis dans un mélangeur à disque pendant 40 min à 50°C. La N-méthyl pyrrolidone a été rajoutée progressivement pour maintenir la viscosité des encres pour cathodes obtenues dans les valeurs 6000-10000 Centipoises.

**Méthode 2** : Avec cette méthode, on fabrique la pâte pour cathode selon la méthode originale d'extrusion à partir des produits secs P0 granulés broyés, P1 à P4 poudre obtenues par atomisation ainsi que les matières actives et le liant PVDF. Dans ce cas la Dref liquide ne peut pas être utilisée. Le mélange NMC 622, PVDF Kynar HSV8010 est extrudé successivement avec les poudres P0 à P4 à l'aide d'une micro-extrudeuse commercialisée par la société DSM. On introduit de la NMP puis les poudres P conjointement au mélange NMC 622, PVDF Kynar HSV8010. La NMP est ajoutée au mélange solide et ajustée de sorte à obtenir des viscosités des encres obtenues comprises entre 6000 et 10000 Centipoises et sont utilisées pour la réalisation des électrodes comme décrit dans l'exemple 2.

On suit les étapes suivantes identiques pour les poudres P0 à P4 :

- Introduction de 9,35 mL de NMP dans l'extrudeuse, préchauffée à 50°C ; une fois la NMP introduite, la vitesse de vis est augmentée à 240 rpm ;
- 42,6 g des poudres P conjointement au mélange NMC 622, PVDF Kynar HSV8010 sont introduits progressivement pendant 30-60 secondes; le couple est surveillé en permanence, il est ajusté avec de la NMP de sorte à rester dans la gamme 1000 - 1400 N.m.
- Une fois le couple stabilisé, 4,9 g de NMP sont introduits progressivement pendant 30-60 secondes ; le couple descend progressivement jusqu'à 100 N.m.
- L'encre de cathode est récupérée à la sortie de l'extrudeuse. La masse sèche est de 76-78%. On obtient 5 encres de cathode avec les 5 poudres P0, P1, P2, P3 et P4 utilisées pour la réalisation des électrodes comme décrit dans l'exemple 2.

Les cathodes réalisées comme décrit dans l'exemple 2 à partir des encres obtenues par les deux méthodes ont des épaisseurs similaires, de l'ordre de 78-82 $\mu$m et leurs résistances sont données au tableau 2. On trouvera la valeur de la cathode de référence réalisée selon la méthode conventionnelle à partir d'une dispersion liquide.

[Tableau 2]

| | Exemple 2 | Exemple 4 | Exemple 4 |
|---|---|---|---|
| Source de nanotubes de carbone | Référence Résistance spécifique Cathode Ohms cm | Méthode 1 Résistance spécifique Cathode Ohms cm | Méthode 2 Résistance spécifique Cathode Ohms cm |
| P0 | | 55±5 | 18±2 |

(suite)

| Source de nanotubes de carbone | Exemple 2<br>Référence Résistance spécifique Cathode Ohms cm | Exemple 4<br>Méthode 1 Résistance spécifique Cathode Ohms cm | Exemple 4<br>Méthode 2 Résistance spécifique Cathode Ohms cm |
|---|---|---|---|
| P1 | | 12±1 | 8±1 |
| P2 | | 8±1 | 7±1 |
| P3 | | 9±1 | 7±1 |
| P4 | | 9±1 | 7±1 |
| Dref | 7±1 | | |

Ces résultats montrent que les cathodes obtenues à partir des compositions de l'invention montrent une performance électrique supérieure à celles de l'art antérieur tel que les poudres issues des granulés de EP 2550699 (P0) mais donne les mêmes résultats en terme de performance électrique que la dispersion nanotubes de carbone à base NMP de l'exemple 1 (Dref). Les particules à plus basse densité, issues de l'atomisation à température du flux d'air supérieure à 120°C montrent des résultats proches de la référence. On peut donc conclure que des nanotubes de carbone utilisables dans de telles applications doivent présenter des densités inférieures à 0,5.

La méthode de l'extrusion (Méthode 2) donne les résultats les plus proches de la référence de l'exemple 2. L'utilisation des poudres P0 issues des granulés de EP 2550699 donne des résultats qui restent toujours en décalage par rapport aux produits de l'invention.

Exemple 6 : mesure de l'absorbance.

Les poudres sèches (P0 et P4) ont été introduites dans de la NMP à 6% massiques à température ambiante.

Après le mélange à 600 rpm avec le mélangeur à disque pendant 30 min, l'extrait sec précis a été évalué avec une thermo balance. Des solutions avec des dilutions à 50 +-2 ppm ont été effectuées.

L'absorbance est mesurée à l'aide d'un spectrophotomètre HACH DR1900, à la longueur d'onde de lumière de 360 nm.

L'absorbance (A), également appelée densité optique (DO), est la quantité de lumière absorbée par une dispersion. Plus l'absorbance A est importante, mieux les particules sont reparties dans le volume de dispersion (Tableau 3) .

[Tableau 3]

| Tableau 3 | Absorbance A |
|---|---|
| Dispersion de l'exemple 1 Dref | 3,2 - 3,4 |
| Dispersion avec P0 | 2,2 - 2,6 |
| Dispersion avec P 4 | 3 - 3,4 |

La dispersion réalisée à partir de la poudre P4 de l'invention présente une absorbance équivalente à celle de l'exemple 1 Dref, bien supérieure à celle obtenue à partir de P0 démontrant une bonne distribution des nanotubes de carbone issus de P4 dans le solvant.

Exemple 7 :

Dans cet exemple, on évalue la synergie de la combinaison du noir de carbone avec des nanotubes de carbone dans les électrodes fabriquées à l'aide des compositions de l'invention comparativement à celles des compositions de l'art connu (voie type solvant de l'exemple 1, voie des granulés issus de EP 2550699 P0 et à sec en mélangeant P2 avec du noir de carbone).

La combinaison avec le noir de carbone lors de l'étape d'atomisation donne les meilleurs résultats. (Tableau 5)

Les électrodes sont formulées selon une recette dans les proportions des composants du tableau 4:

[Tableau 4]

| Tableau 4 | % massique |
|---|---|
| Charge active NMC622 (UMICORE) | 96,38 |
| Noir de Carbone C65 (Imerys) | 1,5 |
| nanotubes de carbone | 0,5 |
| PVDF Kynar® 1810 (Arkema) | 1,5 |
| PVP K25 (Aldrich) | 0,12 |

Dans le tableau 5 on trouve les résistances mesurées sur les cathodes réalisées à partir de 4 modes de mélange des nanotubes de carbone et Noir de Carbone. Le mélange effectué préalablement à l'atomisation selon les compositions de l'invention présente les meilleures caractéristiques une fois formulé en électrode. La synergie nanotubes de carbone /noir de carbone est maximale en utilisant le mode opératoire et les compositions de l'invention.

[Tableau 5]

| | R spécifique Ohms cm Cathode voie solvant |
|---|---|
| Mélange à sec avec P2 | 15±1 |
| Mélange dans la dispersion de l'exemple 1 | 13±1 |
| Mélange avant atomisation selon l'invention | 10±1 |
| Mélange à sec avec poudre P0 | 21±1 |

**Revendications**

1. Composition comprenant des Nanotubes de Carbone et au moins un polymère, dans un rapport massique nanotubes de carbone /polymère inférieur à 100/5, ladite composition se présentant sous forme d'une poudre de masse volumique apparente non tassée comprise entre 0,11 et 0,5 g/cm$^3$, présentant une surface spécifique apparente comprise entre 50 et 350 m$^2$/g mesurée à l'aide d'un appareil ASAP 2460 de chez microméritics et une teneur massique en solvant inférieure à 10% dans laquelle le polymère est choisi parmi les polysaccharides modifiés, les polyvinyle pyrrolidone homopolymères ou copolymères, la masse volumique apparente non tassée (MVNT) étant définie par le rapport de la masse de poudre et de son volume après avoir été détassée, la mesure effectuée en mesurant le volume maximum occupé par la poudre dans une éprouvette graduée de masse T fermée de 100 cm$^3$ retournée plusieurs fois lentement avec les pesées éffectuées à l'aide d'une balance de précision à 0,1 g et remplissage aux trois quarts de l'éprouvette puis pesée en une masse m1, fermée, puis retournée lentement plusieurs fois jusqu'à obtenir le volume maximum occupé par la poudre noté v en cm$^3$ conduisant à une masse volumique apparente non tassée exprimée en g/cm$^3$ calculée par la formule suivante MVNT = (m1-T) / v.

2. Composition selon la revendication 1 dans laquelle le polymère est choisi parmi les polyvinyl pyrrolidone homopolymères ou copolymères de masse moléculaire comprise entre 20000 et 60000g/mole.

3. Composition selon la revendication 1 à 2 comprenant en plus du noir de carbone dans des ratios massiques nanotubes de carbone/noir de carbone variant de 100/1 à 1/100.

4. Composition selon les revendications 1 à 3 comprenant en plus au moins un carbonate organiques tel que l'éthyle carbonate, le propyle carbonate, le diéthyle carbonate, le diméthyle carbonate, le fluoro éthylène carbonate seuls ou en mélange.

5. Compositions selon les revendications 1 à 4 comprenant en plus au moins un composé choisi parmi le bis(trifluorométhane)sulfonimide de lithium, l'hexafluorophosphate de lithium, le tétrafluoroborate de lithium, le bis(fluorosulfonyl)imide de lithium, le perchlorate de lithium, l'hexafluoroarsenate de lithium, et le 4,5-dicyano-2-(trifluoromethyl) imidazole sous forme acide ou de sel de lithium, seuls ou en mélange et en particulier le 4,5-dicyano-2-trifluorométhyle imidazole sous forme acide ou de sel de lithium.

**6.** Composition selon les revendications 1 à 5 comprenant en plus du PVDF, homopolymère ou copolymère et / ou un élastomère non halogéné.

**7.** Procédé de préparation d'une composition selon l'une des revendications 1 à 6 mettant en oeuvre un atomiseur et comprenant les étapes suivantes :

- Préparation d'une composition selon l'une des revendications 1 à 9 en présence d'un solvant dans un défloculeur, à une température comprise entre 5 et 80°C pour obtenir une dispersion comprenant des nanotubes de carbone.
- Atomisation de la dispersion par un gaz chauffé à une température supérieure à 120°C et récupération de la poudre.

**8.** Procédé de préparation d'une composition selon l'une des revendications 1 à 6 comprenant les étapes d'extrusion de la composition avec injection de $CO_2$ supercritique lors de l'étape d'extrusion avec une proportion massique de CO2 supercritique compris entre 25 % et 1000 % de la composition puis suivi du dégazage du $CO_2$ et récupération de poudre.

**9.** Utilisation d'une composition selon l'une des revendications 1 à 6 pour la fabrication d'électrodes avec ou sans solvant.

**10.** Electrode obtenue à selon l'utilisation de la revendication 9.

**11.** Batterie comprenant au moins une électrode selon la revendication 10.

[Figure 1]

[Figure 2]

Europäisches
Patentamt

European
Patent Office

Office européen
des brevets

**RAPPORT DE RECHERCHE EUROPEENNE**

Numéro de la demande

**EP 23 17 1571**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 893 947 A1 (ARKEMA SA [FR]) 1 juin 2007 (2007-06-01) | 1,3,5,6, 9-11 | INV. C01B32/168 H01M4/00 |
| Y | * abrégé * * revendications 1,3,13,15 * * exemples 1a,1b,2a,2b; tableau 1 * * tableau 2 * ----- | 1,3,5,6, 9-11 | |
| Y | US 2014/001416 A1 (FIFFEMEIER EGBERT [DE] ET AL) 2 janvier 2014 (2014-01-02) * abrégé * * revendications 1-17 * * alinéa [0058] * * figure 1 * ----- | 1,3,5,6, 9-11 | |
| A | US 2019/002289 A1 (YOON JAE KEUN [KR] ET AL) 3 janvier 2019 (2019-01-03) * le document en entier * ----- | 1 | |
| A | MI YINGYING ET AL: "Carbon nanotube-loaded mesoporous LiFe0.6Mn0.4PO4/C microspheres as high performance cathodes for lithium-ion batteries", JOURNAL OF POWER SOURCES, ELSEVIER, AMSTERDAM, NL, vol. 267, 2 juin 2014 (2014-06-02), pages 459-468, XP028863722, ISSN: 0378-7753, DOI: 10.1016/J.JPOWSOUR.2014.05.102 * le document en entier * ----- | 1-11 | DOMAINES TECHNIQUES RECHERCHES (IPC) C01B H01M |

-/--

Le présent rapport a été établi pour toutes les revendications

| Lieu de la recherche | Date d'achèvement de la recherche | Examinateur |
|---|---|---|
| La Haye | 7 septembre 2023 | Mertins, Frédéric |

**EP 4 273 099 A1**

Europäisches
Patentamt

European
Patent Office

Office européen
des brevets

# RAPPORT DE RECHERCHE EUROPEENNE

Numéro de la demande

**EP 23 17 1571**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Ito Fumiya ET AL: "Polymer coating on carbon nanotubes into Durobeads is a novel strategy for human environmental safety", Nagoya Journal of Medical Science, 1 novembre 2018 (2018-11-01), pages 597-604, XP093015510, Japan DOI: 10.18999/nagjms.80.4.597 Extrait de l'Internet: URL:https://www.ncbi.nlm.nih.gov/pmc/articles/PMC6295439/ [extrait le 2023-01-19] * le document en entier * ----- | 1 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 7 septembre 2023 | Mertins, Frédéric |

EPO FORM 1503 03.82 (P04C02)

14

## ANNEXE AU RAPPORT DE RECHERCHE EUROPEENNE
## RELATIF A LA DEMANDE DE BREVET EUROPEEN NO.

EP 23 17 1571

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-09-2023

| Document brevet cité au rapport de recherche | | | Date de publication | Membre(s) de la famille de brevet(s) | | | Date de publication |
|---|---|---|---|---|---|---|---|
| FR 2893947 | A1 | | 01-06-2007 | BR | PI0619221 | A2 | 20-09-2011 |
| | | | | EP | 1954752 | A1 | 13-08-2008 |
| | | | | FR | 2893947 | A1 | 01-06-2007 |
| | | | | JP | 2009517517 | A | 30-04-2009 |
| | | | | KR | 20080065688 | A | 14-07-2008 |
| | | | | US | 2009176924 | A1 | 09-07-2009 |
| | | | | WO | 2007063253 | A1 | 07-06-2007 |
| US 2014001416 | A1 | | 02-01-2014 | CN | 103493256 | A | 01-01-2014 |
| | | | | EP | 2656417 | A1 | 30-10-2013 |
| | | | | JP | 2014507496 | A | 27-03-2014 |
| | | | | KR | 20130132550 | A | 04-12-2013 |
| | | | | TW | 201240203 | A | 01-10-2012 |
| | | | | US | 2014001416 | A1 | 02-01-2014 |
| | | | | WO | 2012084764 | A1 | 28-06-2012 |
| US 2019002289 | A1 | | 03-01-2019 | CN | 109219575 | A | 15-01-2019 |
| | | | | EP | 3372557 | A1 | 12-09-2018 |
| | | | | KR | 20170139823 | A | 20-12-2017 |
| | | | | US | 2019002289 | A1 | 03-01-2019 |
| | | | | WO | 2017213372 | A1 | 14-12-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2550699 A